Europäisches Patentamt

European Patent Office

Office européen des brevets

(19)

(11) Veröffentlichungsnummer: **0 037 907**
A1

# (12) EUROPÄISCHE PATENTANMELDUNG

(21) Anmeldenummer: 81101864.7

(22) Anmeldetag: 13.03.81

(51) Int. Cl.³: **B 32 B 27/00**, B 32 B 7/00

(30) Priorität: 25.03.80 DE 3011438
15.11.80 DE 3043157

(43) Veröffentlichungstag der Anmeldung: 21.10.81
Patentblatt 81/42

(84) Benannte Vertragsstaaten: DE FR GB IT NL SE

(71) Anmelder: HOECHST AKTIENGESELLSCHAFT,
Postfach 80 03 20, D-6230 Frankfurt/Main 80 (DE)

(72) Erfinder: Maier, Walter, Dr., Frankfurter Strasse 29,
D-6238 Hofheim am Taunus (DE)
Erfinder: Schurr, Ulrich, Florian-Geyer-Strasse 10,
D-6070 Langen (DE)
Erfinder: Ritter, Volker, Schöne Aussicht 49,
D-6200 Wiesbaden (DE)
Erfinder: Gübitz, Franz, Am Reitplatz 1, D-6233 Kelkheim
(Taunus) (DE)
Erfinder: Schunck, Erich, Lessingstrasse 2,
D-6203 Hochheim am Main (DE)
Erfinder: Smukal, Siegfried, Sickingenstrasse 19a,
D-6200 Wiesbaden (DE)

(54) Kunststoff-Formkörper mit strukturierter Oberfläche und ein Verfahren zu seiner Herstellung.

(57) Die Herstellung von Polypropylen-Formkörpern mit strukturierter Oberfläche durch Kaschieren oder Beflocken gelingt, wenn man eine Polypropylen-Formmasse, welche ein kautschukartiges Mischpolymerisat und verstärkende Füllstoffe enthält, zu den zu kaschierenden oder beflockenden Formkörpern verarbeitet. Man erhält kaschierte oder beflockte Formkörper, die die Qualitätsanforderungen sowohl der Verarbeitungsindustrie als auch der Automobilindustrie ausgezeichnet erfüllen.

EP 0 037 907 A1

## Kunststoff-Formkörper mit strukturierter Oberfläche und ein Verfahren zu seiner Herstellung

Für die Innenausstattung von Fahrzeugen werden in zunehmendem Maße Kunststoffe eingesetzt. Polypropylen hat sich dabei wegen seiner guten physikalischen Eigenschaften und seiner chemischen Resistenz als besonders geeignet erwiesen. Ferner wird versucht, die Innenräume von Kraftfahrzeugen durch entsprechende Oberflächenausbildung wohnlicher zu gestalten.

Dies kann durch Beschichten oder Kaschieren der Oberflächen mit Textilien wie z.B. Gewirken, Gestricken oder Florgeweben, und/oder Kunststoff-Folien oder durch Beflocken der Oberflächen erreicht werden. Während sich Polystyrol, Pfropfpolymerisate von Styrol-Acrylnitril auf Polybutadien oder Styrol-Acrylnitril-Copolymerisate haftfest mit Kunststoff-Folien und dgl. verkleben oder beflocken lassen, war es bisher bei Polypropylen mit ausreichender Haftfestigkeit nicht möglich.

Es wurde nun gefunden, daß dieses Problem gelöst werden kann, wenn man ein Polypropylen verwendet, welches ein kautschukartiges Mischpolymerisat und einen verstärkenden Füllstoff enthält.

Gegenstand der Erfindung ist somit ein Formkörper aus Kunststoff mit strukturierter Oberfläche bestehend aus einer Kunststoff-Unterschicht, einer Kleberschicht und einer Folienschicht oder Textilschicht, dadurch gekennzeichnet, daß die Kunststoff-Unterschicht aus einer Mischung von

a) 95 bis 50 Gew.-Teilen isotaktischem Polypropylen oder Mischpolymerisaten des Propylens mit bis zu 10 Gew,-% Äthylen,

b) 5 bis 50 Gew,-Teilen kautschukartiger, mit Polypropylen verträglicher Mischpolymerisate und

c) 10 bis 50 Gew.-Teilen verstärkender Füllstoffe

besteht, und das Verfahren zu seiner Herstellung.

Dieser Formkörper erfüllt ausgezeichnet die Qualitätsanforderungen sowohl der Verarbeitungsindustrie als auch der Automobilindustrie.

Der Formkörper besteht in seiner Kunststoff-Unterschicht aus

a) 95 bis 50, vorzugsweise 90 bis 80 Gew.-Teilen isotaktischem Polypropylen oder Mischpolymerisaten des Proypylens mit bis zu 10 Gew.-% Äthylen,

b) 5 bis 50, vorzugsweise 10 bis 20 Gew.-Teilen kautschukartiger, mit Polypropylen verträglicher Mischpolymerisate und

c) 10 bis 50, vorzugsweise 20 bis 40 Gew.-Teilen verstärkender Füllstoffe.

Vorzugsweise wird ein Homo- oder Copolymer des Propylens mit einem Schmelindex MFI 230/5 nach DIN 53 735 von 5 bis 25 g/10 min verwendet.

Als kautschukartige Mischpolymerisate eignen sich vor allem amorphe Mischpolymerisate aus 30 - 70 Gew.-% Äthylen und 70 - 30 Gew.-% Propylen, Terpolymerisate aus Äthylen, Propylen und bis zu 5 Gew.-% Dienen, vorzugsweise Äthylidennorbornen oder 1,4-Hexadien, Mischpolymerisate aus Äthylen und 10 bis 45 Gew.-% Vinylacetat oder Blockcopolymere aus Styrol und Butadien oder Styrol und Isopren, die an beiden Molekülenden Polystyrolblöcke besitzen.

Als verstärkende Füllstoffe werden vorzugsweise Talkum,
Kreide, Holzmehl, Glasfasern oder Glaskugeln eingesetzt.

Zum Kaschieren werden die Formteile zunächst mit einem
Primer und dann mit einem Klebstoff beschichtet. Anschließend
werden sie mit der ebenfalls mit Klebstoff beschichteten
und aufgeheizten Folie mittels Unterdruck nach dem Tiefziehverfahren kaschiert. Die Klebstoffe müssen im Tiefziehverfahren verarbeitbar sein, hohe Anfangs- und Wärmefestigkeiten besitzen und den Anforderungen genügen, die bei der
Kaschierung komplizierter Formteile auftreten. Weiterhin
müssen die Klebstoffe sowohl auf dem Formteil, wie auch
auf der Kunststoff-Folie haften und wärmeaktivierbar sein.

Zum Beflocken werden die Formteile zunächst mit einem Primer
und dann mit einem Klebstoff beschichtet. Anschließend werden
sie, vor dem Aushärten des Klebstoffes, elektrostatisch beflockt.

Geeignete Primer und Klebstoffe sind an sich bekannt.
Bewährt haben sich als Primer chlorierte Polyolefine mit
Chlorgehalten von 15 - 50 Gew.-%, gegebenenfalls in Mischung
mit Äthylen-Vinylacetat-Copolymerisaten, ferner mit Carbonsäuren oder Carbonsäureanhydriden modifizierte amorphe
Polypropylene, sulfonierte, bzw. sulfochloriertes amorphes
Polypropylen oder Mischungen von amorphem Polypropylen mit
Styrolpolymeren, Polyamiden oder Polyalkyleniminen. Der
Primer kann durch Tauchen, Spritzen oder Streichen aufgetragen werden, vorzugsweise in Schichtdicken von 5 - 30 µm.
Eine chmische oder physikalische Vorbehandlung der Oberfläche, z.B. durch Corona-Entladung, hat ebenfalls haftverbessernde Wirkung.

Geeignete Klebstoffe für das Kaschieren sind Lösungen einer
Kombination eines Elastomeren aus der Reihe Polychloropren,
Polyurethanelastomere oder Butadien-Acrylnitril-Kautschuk
mit einem Harz aus der Reihe Alkylphenolharze und/oder
Arylphenolharze oder phenolmodifizierter Kollophoniumharze. Zur Vernetzung können die Klebstofflösungen ggf. noch Vernetzungskomponenten wie z.B. Triphenylmethan-4,4',4''-triisocyanat enthalten.

Das Verhältnis Elastomer zu Harz beträgt 100 : 20 bis 100 : 150, vorzugsweise 100 : 50 bis 100 : 100. Der Kleber wird aufgespritzt in einer Menge von 50 - 300 $g/m^2$, vorzugweise 100 - 200 $g/m^2$.

Geeignete Klebstoffe für das Beflocken sind Dispersionen oder Lösungen von vernetzbaren Polymerisaten auf Basis von Vinylacetat und Acrylsäureestern, sowie Copolymerisaten von Vinylacetat mit Styrol, Acrylsäureestern und/oder Acrylnitril. Geeignet sind auch Polyurethan- oder Epoxidharzklebstoffe, Lösungen von chlorierten Polyolefinen mit Chlorgehalten von 5 - 60 Gew.-% oder elektronenstrahlhärtbaren Harze aus ungesättigten Präpolymeren auf Basis von Polyestern, Polyepoxiden, Polyurethanen und Vinylpolymeren. Auch diese Klebstoffe sind an sich bekannt. Klebstoffmengen von 50 bis 300, vorzugsweise von 100 bis 200 $g/m^2$ ergeben sehr gute Haftung des Flocks. Der Auftrag des Klebstoffes wird mit üblichen Methoden durchgeführt.

Als Kaschiermaterial eignen sich geschäumte oder ungeschäumte Folien mit strukturierter Oberfläche aus Weich-PVC, PVC-Copolymerisaten, PVC-Blends oder Copolymerisaten aus Äthylen/Vinylacetat.

Anstelle einer reinen Kunststoff-Folie können auch Folien, die einseitig mit einem elastischen Gewirke oder Gestricke beschichtet sind, verwendet werden. Der Verbund zwischen Folie und Textilmaterial kann z.B. durch Extrusionsbeschichtung mit geschäumtem oder ungeschäumtem Weich-PVC oder auch mit Polypropylen bewerkstelligt werden. Weiterhin kann bei dem Verbund Textilmaterial/Kunststoff-Folie die Folie durch eine geschäumte oder ungeschäumte Weich-PVC-Schicht ersetzt werden, die mittels eines PVC-Plastisols direkt oder im Umkehrverfahren auf das Textilmaterial aufgebracht wurde. Das Textilmaterial besteht aus einem Gewirk oder Gestrick, vorzugsweise aus einem Gestrick. Die für das Textilmaterial geeigneten Fasern bestehen z.B. aus Baumwolle, Cellulosederivaten, linearen Polyestern und Polyamiden, Polyacrylnitril und Mischungen dieser Fasern. Bevorzugt werden Polyesterfasern und Mischungen von Polyesterfasern mit Baumwoll- oder Polyamid-Fasern im Verhältnis 10 : 90 bis 90 : 10, vorzugsweise 80 : 20 bis 50 : 50. Das Textilmaterial hat ein Quadratmetergewicht von 90 bis 400, vorzugsweise von 150 - 250 g.

Als Flockmaterial eignen sich Fasern aus Baumwolle, Viskose, Polyacrylnitril, Polypropylen und vorzugsweise Polyamid oder Polyester mit einem Titer von 1-25 dtex und einer Länge von 0,5 - 3 mm. Vorzugsweise werden 50 - 250 g/m² Flock aufgebracht.

Die gesamte Oberfläche eines Formkörpers kann strukturiert werden oder, bei partiellem Auftrag von Primer und Klebstoff, nur bestimmte Bereiche.

Die Haftung der Oberflächenschicht ist so gut, daß auch ein nachträgliches Verformen der Teile durch Tiefziehen möglich ist. Dekorative Muster können durch Prägungen nach dem Veredeln hervorgerufen werden. Das erfindungsgemäße Verfahren eignet sich zur Herstellung von Armaturentafeln, Hutablagen, Handschuhfächern, Ablagefächern und Konsolen, Tür- und Sitzrückenverkleidungen, Dachhimmel und sonstigen Verkleidungen im Fahrzeuginnenraum. Weiterhin können mittels dieses Verfahrens Elemente zur Gestaltung von Wohnräumen, Dekorelemente für Ausstellungsräume und Schaufenster, Einsätze für Besteckschubladen, Verpackungen bzw. Transportbehälter für Schmuck oder Fotoartikel oder andere stoß- und kratzempfindlichen Güter, Spielzeuge oder Spielzeugteile, rutschfeste Textilhülsen und Lockenwickler und naßfeste Dekorflächen für Sanitärräume hergestellt werden.


## Beispiel 1

Aus einer Mischung von 55 Gew.-% isotaktischem Polypropylen (MFI 230/5 = 18 g/10 min), 25 Gew.-% eines amorphen Copolymeren aus 55 Gew.-% Äthylen und 45 Gew.-% Propylen und 20 Gew.-% Kreide, jeweils berechnet auf die Mischung, wird eine Armaturentafel für einen PKW gespritzt. Auf die zu kaschierenden Stellen wird eine 5%-ige Lösung eines chlorierten amorphen Polypropylens (mit einem Chlorgehalt von 25,6 Gew.-%) in Toluol als Primer in einer Schichtdicke von 10-15 μm aufgespritzt. Nach 60 Sekunden bei 100°C wird auf die mit Primer gespritzten Stellen ein Kleber auf Basis 100 Gew.-Tle. Polychloropren

| | | |
|---|---|---|
| 90 | " " | phenolmodifiziertes Kolophoniumharz |
| 5 | " " | Magnesiumoxid |
| 4 | " " | Zinkoxid |

in 450 Gew.Tln. Lösungsmittel (Toluol: Äthylacetat: Leichtbenzin = 1:1:1) und 25 Gew. Tle. einer 20%-igen Lösung von Triphenylmethan-4,4',4''-triisocyanat in Methylenchlorid in einer Menge von 100 g/m² aufgebracht. Anschließend wird die Armaturentafel mit einer, ebenfalls mit demselben Kleber beschichteten und auf ca. 140°C erwärmten, geschäumten PVC-Folie von 1,7 mm Dicke mittels Unterdruck während des Tiefziehens verklebt, wobei die Armaturentafel als Matrize dient.


20 Minuten nach dem Kaschiervorgang ist die Armaturentafel zu handhaben. Nach einer Lagerung von weiteren 48 Stunden erreicht die Klebverbindung ihre volle Festigkeit. Der Schälwiderstand, bestimmt nach DIN 53 273, beträgt 25 N/cm.

0037907

## Beispiel 2

Eine Armaturentafel wird wie in Beispiel 1 hergestellt und vorbehandelt. Anstelle der geschäumten Weich-PVC-Folie wird jedoch eine textilbeschichtete Weich-PVC-Folie verwendet, welche wie folgt hergestellt wurde. Auf die Weich-PVC-Folie wird ein hochelastisches rundgestricktes Scherplüsch aus Polyester-Filament und Polyester-Spinnfasergarn im Verhältnis 25 : 75 auf einer Kalanderanlage unter thermischer Einwirkung doubliert. Diese textilkaschierte Weich-PVC-Folie wird dann wie in Beispiel 1 auf die Armaturentafel durch Tiefziehen aufgebracht.

## Beispiel 3

Eine Armaturentafel wird ebenfalls wie in Beispiel 1 hergestellt und vorbehandelt. Anstelle der geschäumten Weich-PVC-Folie wird jedoch ein mit einem PVC-Plastisol beschichtetes Textilmaterial verwendet. Hierzu wird ein hochelastisches Kettengewirke aus glattem und texturiertem Polyester-Filament und Acrylnitril-Stapelfasern im Verhältnis 15 : 85 auf einer Beschichtungsanlage mit einem PVC-Plastisol, welches ein PVC/Weichmacherverhältnis von 50:50 aufweist, beschichtet. Durch diese Behandlung wird das Textilmaterial vakuumdicht und wird wie die geschäumte PVC-Folie in Beispiel 1 im Tiefziehverfahren weiterverarbeitet.

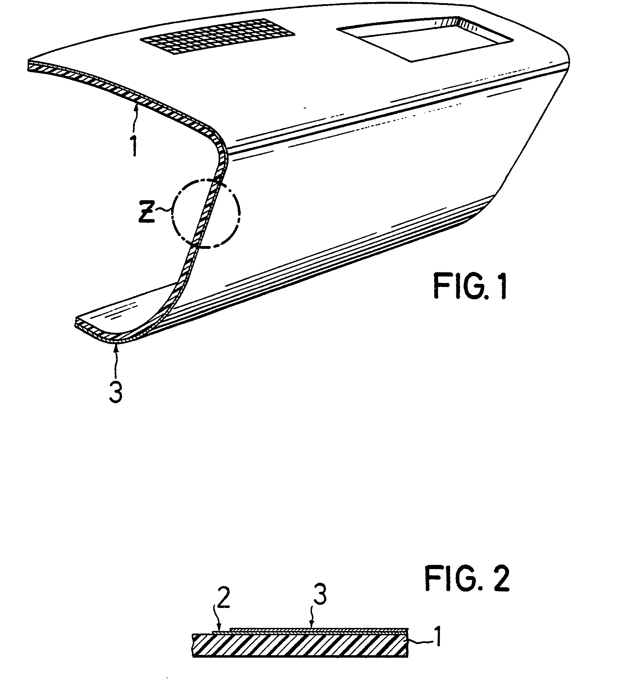

In der Figur 1 wird ein Teil einer erfindungsgemäßen Armaturentafel für Kraftfahrzeuge in der Draufsicht und im Querschnitt gezeigt. Zu erkennen ist die Kunststoff-Unterschicht (1), auf der die strukturierte Oberflächenschicht (3) aufgebracht ist. In der Figur 2 ist die Einzelheit Z vergrößert abgebildet, so daß auch die Kleberschicht (2) sichtbar wird.

0037907

Beispiel 4

Aus einer Mischung von 55 Gew.-% isotaktischem Polypropylen (MFI 230/5 = 18 g/10 min), 25 Gew.-% eines amorphen Copolymeren aus 55 Gew.-% Äthylen und 45 Gew.-% Propylen und 20 Gew.-% Kreide, jeweils berechnet auf die Mischung, wird eine Armaturentafel für einen PKW gespritzt. Auf die zu beflockenden Stellen wird eine 5%-ige Lösung eines chlorierten amorphen Polypropylens (mit einem Chlorgehalt von 25,6 Gew.-%) in Toluol als Primer in einer Schichtdicke von 10-15 µm aufgespritzt. Nach 60 Sekunden bei 100°C wird auf die mit Primer gespritzten Stellen ein Kleber auf Basis Epoxidharz in einer Menge von 100 g/m² aufgebracht und direkt anschließend mit 80 g/m² Polyamidflock von 6,7 dtex und 1 mm Länge in einer handelsüblichen Beflockungsanlage bei 60 KV beflockt.

Nach einer Trocknung von 10 Minuten bei 120°C ist die Armaturentafel zu handhaben. Nach einer Lagerung von 48 Stunden werden Proben aus der Armaturentafel einem Abriebtest mit einem Abriebgerät Typ APG 100/20 der Fa. Maag & Schenk unterzogen. Nach 500 Cyclen mit 10 N Belastung ist noch keinerlei Abrieb zu sehen.

Entsprechende Ergebnisse werden auch mit anderen Primern, z.B. mit Carbonsäureanhydrid modifiziertem Polypropylen, anderen Klebstoffen, z.B. auf Basis Polyurethan und den anderen oben genannten Fasern als Flock erhalten. Die erforderliche Trocknungszeit hängt vom speziellen Kleber und der Trocknungstemperatur ab. Bei Temperaturen zwischen Raumtemperatur und 140°C werden im allgemeinen Zeiten von einigen Minuten bis etwa 24 Stunden benötigt.

Patentansprüche

1. Formkörper aus Kunststoff mit strukturierter Oberfläche bestehend aus einer Kunststoff-Unterschicht, einer Kleberschicht und einer Folienschicht oder einer Textilschicht, dadurch gekennzeichnet, daß die Kunststoff-Unterschicht aus einer Mischung von

   a) 95 bis 50 Gew.-Teilen isotaktischem Polypropylen oder Mischpolymerisaten des Propylens mit bis zu 10 Gew.-% Äthylen,

   b) 5 bis 50 Gew.-Teilen kautschukartiger, mit Polypropylen verträglicher Mischpolymerisate und

   c) 10 bis 50 Gew.-Teilen verstärkender Füllstoffe besteht.

2. Formkörper nach Anspruch 4, dadurch gekennzeichnet, daß das kautschukartige Mischpolymerisat ein amorphes Mischpolymerisat aus 30 - 70 Gew.-% Äthylen und 70 - 30 Gew.-% Propylen oder ein Terpolymerisat aus Äthylen, Propylen und bis zu 5 Gew.-% Dienen ist.

3. Formkörper nach Anspruch 1 und 2, dadurch gekennzeichnet, daß die verstärkende Füllstoffe Talkum, Kreide, Holzmehl, Glasfasern oder Glaskugeln sind.

4. Verfahren zum Herstellen von Kunststoff-Formkörpern mit strukturierter Oberfläche durch Beschichten der Oberfläche der Formkörper zuerst mit einem Primer und danach mit einem Klebstoff und anschließendes Kaschieren mit einer rückseitig mit Klebstoff beschichteten Kunststoff-Folie oder Textilmaterial nach dem Tiefziehverfahren oder elektrostatisches Beflocken mit einem Fasermaterial, dadurch gekennzeichnet, daß man Formkörper aus

a) 95 bis 50 Gew.-Teilen isotaktischem Polypropylen oder Mischpolymerisaten des Propylens mit bis zu 10 Gew.-% Äthylen,

b) 5 bis 50 Gew.-Teilen kautschukartiger, mit Polypropylen verträglicher Mischpolymerisate und

c) 10 bis 50 Gew.-Teilen verstärkender Füllstoffe einsetzt.

5. Verfahren nach Anspruch 4, dadurch gekennzeichnet, daß man Formkörper einsetzt, die als kautschukartige Mischpolymerisate amorphe Mischpolymerisate aus 30 - 70 Gew.-% Äthylen und 70 - 30 Gew.-% Propylen oder Terpolymerisate aus Äthylen, Propylen und bis zu 5 Gew.-% Dienen enthalten.

6. Verfahren nach Anspruch 4 und 5, dadurch gekennzeichnet, daß man Formkörper einsetzt, die als verstärkende Füllstoffe Talkum, Kreide, Holzmehl, Glasfasern oder Glaskugeln enthalten.

FIG. 1

FIG. 2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - A - 2 062 253</u> (MITSUI PETRO-CHEMICAL) | |
| A | <u>DE - A - 2 125 397</u> (DUNLOP) | |
| A | <u>GB - A - 1 422 123</u> (COAL INDUSTRY LTD.) | |
| A | <u>NL - A - 73 06244</u> (MITSUI PETRO-CHEMICAL) | |
| A | <u>US - A - 3 904 470</u> (T. FUKUKI et al.) | |
| PA | <u>US - A - 4 229 504</u> (A.E. BRACHMAN) | |

----

**KLASSIFIKATION DER ANMELDUNG (Int. Cl.³)**

B 32 B 27/00
7/00

**RECHERCHIERTE SACHGEBIETE (Int. Cl.³)**

B 32 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-07-1981 | VAN THIELEN |

EPA form 1503.1  06.78